# EUROPÄISCHE PATENTSCHRIFT

(11) **EP 3 167 947 B1**
(45) Veröffentlichungstag und Bekanntmachung des Hinweises auf die Patenterteilung: **27.02.2019**
(21) Anmeldenummer: 16002097.0
(22) Anmeldetag: 28.09.2016
(51) Int. Cl.: B01D 29/11, B01D 29/21

(54) **FILTERVORRICHTUNG**
FILTER DEVICE
DISPOSITIF DE FILTRE

(30) Priorität: 10.11.2015 DE 102015014497
(43) Veröffentlichungstag der Anmeldung: 17.05.2017
(73) Patentinhaber: Hydac Fluidcarecenter GmbH, 66280 Sulzbach/Saar (DE)
(72) Erfinder: Schwender, Matthias, 66459 Kirkel (DE); Mees, Harald, 66822 Lebach (DE); Galifi, Giuseppe, 66386 St. Ingbert (DE); Wenzel, Andrei, 66292 Riegelsberg (DE)
(74) Vertreter: Bartels und Partner, Patentanwälte

(56) Entgegenhaltungen:
- WO-A1-2004/009215
- WO-A1-2013/120568
- DE-A1-102009 028 464
- DE-A1-102011 081 143
- FR-A1- 2 812 822

## Beschreibung

Die Erfindung betrifft gemäß dem Oberbegriff des Patentanspruches 1 eine Filtervorrichtung mit einem zumindest teilweise in einem Gehäuse aufnehmbaren Filterelement, das ein rohrförmiges Filtermedium aufweist, das sich an mindestens einem Stützrohr abstützt und mit seinen gegenüberliegenden Stirnseiten zwischen zwei kappenartigen Abschlussstellen erstreckt, das im Betrieb von einem abzureinigenden Fluid durchströmbar ist und mit seinem Innen- und Außenumfang zwei Fluidräume voneinander separiert, und das eine elektrisch leitfähige Ableiteinrichtung aufweist, die mit mindestens einer Ableitbahn über die Kontur des Filtermediums vorsteht.

Aus Umweltschutzgründen heraus kommen heutzutage zusehends höher raffinierte und somit zink- und aschefreie Öl- und Hydraulikmedien in technischen Anlagen, Vorrichtungen und Arbeitsmaschinen zum Einsatz, die beim Filtrieren zum Abreinigen der genannten Medien von Partikelverschmutzungen bisher unbekannte Probleme durch elektrostatische Aufladung verursachen. Verantwortlich dafür ist das physikalische Phänomen der Abscherung von Ladungsträgern an der Filteroberfläche. Ist das jeweilige Öl- oder Hydraulikmedium gering leitfähig, können die Ladungsträger nicht mehr abgeleitet werden, so dass elektrostatische Aufladungen entstehen mit Spannungsspitzen durchaus im Bereich von bis zu 30.000 V und mehr.

Sobald dann eine kritische Durchschlagspannung erreicht ist, kommt es zu Entladungen in der Anlage. Diese können direkte Schäden in Form verbrannter und durchlöcherter Filterelemente, Störungen an elektronischen Systemen und gegebenenfalls sogar Verpuffungen im Tank verursachen. Indirekt wird dabei das eingesetzte Öl- oder Hydraulikmedium durch beschleunigte Ölalterung und Bildung von lackähnlichen Rückständen geschädigt. Als Folge hiervon können Ventile, Schaltkolben und Wellen verblockt werden. Außerdem verringert sich die Standzeit der eingesetzten Filterelemente erheblich.

Um elektrostatisch bedingte Schäden an Systemkomponenten bzw. am jeweils verwendeten Öl- oder Hydraulikmedium zu verhindern, hat die Schutzrechtsinhaberin die sogenannte Stat-Free®-Technologie entwickelt. Diese beruht gemäß der technischen Lehre nach der DE 10 2008 004 344 A1 in Abhängigkeit des zu filtrierenden Öl- oder Hydraulikmediums auf einer selektiven Auswahl von einzelnen Filtermedien oder Filterlagen des Filterelements nach der sogenannten triboelektrischen Spannungsreihe, die eine sinnfällige Materialkombination aus Filtermaterialien mit unterschiedlichen Spannungspotentialen derart vorsieht, dass eine Medienaufladung erst gar nicht zustande kommt.

Eine andere Möglichkeit, die beschriebenen elektrostatischen Aufladungen zu verhindern, besteht darin, das Filterelement der Filtervorrichtung mit einer elektrisch leitfähigen Ableiteinrichtung zu versehen, die mittels einer Ableitbahn, die bevorzugt mit einem Masseanschluss des Filtergehäuses der Filtervorrichtung kontaktierbar ist, einen Ladungsabtransport ermöglicht. Ein Vertreter einer dahingehenden Lösung ist in der WO 2013/120568 A1 aufgezeigt, die ein Verfahren zum Herstellen einer gattungsgemäßen Filtervorrichtung nebst Filterelement betrifft, bestehend aus einer Vielzahl von Einzel- oder Teilkomponenten, die zumindest teilweise mittels eines Laser-Durchstrahlschweißverfahrens miteinander verbunden werden, wobei
- hierfür mindestens eine dieser miteinander zu verbindenden Teilkomponenten aus einem strahlungsdurchlässigen Material ausgebildet ist und vorzugsweise mittels einer Laser-Strahlung zumindest teilweise durchstrahlt wird;
- mindestens eine elektrisch leitfähige, thermoplastische Zwischenlage als Ableitbahn einer Ableiteinrichtung zwischen den miteinander zu verbindenden Teilkomponenten angeordnet wird und/oder mindestens ein thermoplastischer Aufschmelzbereich in mindestens einer elektrisch leitfähigen Teilkomponente der miteinander zu verbindenden Teilkomponenten festgelegt wird;
- durch Absorption der Strahlung zumindest in der jeweiligen Zwischenlage bzw. im jeweiligen Aufschmelzbereich eine Materialanschmelzung erreicht wird und die jeweiligen Teilkomponenten nach einer Materialerkaltung fest miteinander verbunden sind;
- die jeweilige Zwischenlage und/oder die jeweilige Teilkomponente in einen angrenzenden Einbauraum für eine weitere elektrisch leitfähige Teilkomponente ragend angeordnet wird; und
- die jeweilige Zwischenlage bzw. Teilkomponente nach dem Einsetzen der weiteren Teilkomponente in den Einbauraum an dieser elektrisch kontaktierend anliegt.

Dadurch, dass bei der bekannten Lösung die bevorzugt folienartig ausgestaltete Ableitbahn der Ableiteinrichtung mittels des Laser-Durchstrahlschweißverfahrens mit den anderen Einzel- oder Teilkomponenten des Filterelementes durch Aufschmelzen verbunden wird, sind Beschädigungen an der Ableitbahn nicht ausgeschlossen, was deren Leitfähigkeit für den Ladungstransport beeinträchtigt. Die über die Außenkontur des Filterelementes im Bereich seiner Endkappen vorstehende Ableitbahn, die insoweit topfförmig zumindest eines der beiden Enden des Filterelementmaterials nebst seinem Stützrohr übergreift, um in Anlage mit masseführenden Teilen des Filtergehäuses der Filtervorrichtung im Sinne einer Erdung zu kommen, bedingt nur eine geringe Kontaktfläche mit dem dahingehenden Masseanschluss, was auch insoweit die mögliche Ableitfähigkeit weiter reduziert.

Weitere elektrisch leitfähige Filter gehen aus der DE 10 2011 081 143 A1, der FR 2 812 822 A1 und der WO 2004/009215 A1 hervor.

Ausgehend von dem vorstehend genannten Stand der Technik liegt der Erfindung die Aufgabe zugrunde, eine Filtervorrichtung zu schaffen, die im Filtrierbetrieb vergleichbar zu der vorstehend beschriebenen Stat-Free®-Technologie elektrostatische Aufladungen mit Sicherheit vermeidet, ohne dass dabei die Nachteile im Stand der Technik auftreten, wie sie vorstehend für eine bekannte Ableiteinrichtung mit mindestens einer Ableitbahn beschrieben sind. Eine dahingehende Aufgabe löst eine Filtervorrichtung mit den Merkmalen des Patentanspruches 1 in seiner Gesamtheit.

Dadurch, dass gemäß dem kennzeichnenden Teil des Patentanspruches 1 die Ableiteinrichtung mit ihrer jeweiligen Ableitbahn zwischen den Stirnseiten des Filtermediums am Außen- und/oder Innenumfang desselben angeordnet ist und dass die Ableitbahn unter Anlage mit dem jeweils zuordenbaren Stützrohr zwischen diesem und dem Filtermedium verläuft, ist die Möglichkeit geschaffen, jeweils sehr große Kontaktflächen auszubilden, die einen effizienten Ladungstransport ermöglichen, so dass es, wie durch die Stat-Free®-Technologie aufgezeigt, erst gar nicht zu einer nachweisbaren elektrostatischen Aufladung im Filtrierbetrieb mit der Filtervorrichtung nebst Filterelement kommt. Da die jeweilige Ableitbahn zwischen dem inneren und/oder dem äußeren Stützrohr unter kontaktierender Anlage mit demselben geführt und insoweit positioniert ist, genügt bereits eine kleine Verbindungsfläche mit dem Filtermedium des Filterelementes, um die jeweilige Ableitbahn sicher festlegen zu können, ohne dass dabei größere Areale der Kontaktfläche nebst dem benachbart angeordneten Filterelementmaterial über das Festlegeverfahren, beispielsweise in Form eines Laserverbindungsverfahrens, nachteilig tangiert wären. Vorzugsweise kann in erfindungsgemäßer Weiterausgestaltung der Anbindungslösung auch vorgesehen sein, dass die eine Art Kontaktfahne bildende Ableitbahn einstückiger Bestandteil einer Filterlage des Filtermediums ist, so dass insoweit auf eine nachträglich herzustellende Verbindung im Übergangsbereich zwischen den einzelnen Filterlagen und der kontaktfahnenartigen Ableitbahn völlig verzichtet werden kann.

Soweit in erfindungsgemäßer Weise ein als Ersatz- oder Austauschteil konzipiertes Filterelement eine vergleichbare Ableiteinrichtung mit Ableitbahn wie vorstehend beschrieben aufweist, lässt sich dieses in herstelltechnisch einfacher Weise und kostengünstig erhalten. Da das Filterelement als Ganzes eine handelbare Einheit darstellt, die insbesondere zu Transport- und Austauschzwecken erhöhten Beanspruchungen ausgesetzt ist, ist von Vorteil, dass die kontaktfahnenartige Ableitbahn zwischen Stützrohr und zugeordneter benachbarter Wandung des Filtermediums schützend aufgenommen ist und somit im Gegensatz zum Stand der Technik (WO 2013/120568 A1) keinen Überstand aufweist, der nach außen zur Umgebung hin vorsteht, so dass dergestalt Beschädigungen an freiliegenden Komponenten oder Teilen der bekannten Ableitbahn auftreten können. Insbesondere ist auch in jedem Betriebs- oder Einbauzustand über die definiert positionierte Ableitbahn eine sichere Kontaktierung mit dem Stützrohr als weiterem Teil der Ableiteinrichtung geschaffen, das insbesondere von seinem metallischen oder sonst leitfähigen Aufbau her einen guten Ladungstransport gegenüber den masseführenden Teilen der Filtervorrichtung gewährleistet, so dass insoweit eine verbesserte Kontaktanbahnung erreicht ist. Gegenüber der vorstehend bezeichneten bekannten Lösung, bei der die die zur Umgebung hin vorstehende flexibel ausgeführte folienartige Ableitbahn, insbesondere beim Einbau des Filterelementes in die Filtervorrichtung, von einer gewünschten kontaktierenden Soll-Lage, insbesondere durch ungewolltes Umklappen in eine Ist-Lage geraten kann, bei der die wirksame Kontaktierung mit den masseführenden Teilen des Filtergehäuses oder der Filtervorrichtung nicht mehr oder kaum noch gegeben ist, ist dies mit der erfindungsgemäßen Lösung ausgeschlossen, da die über das Filtermedium vorstehende Ableitbahn durch das Stützrohr in jeder Einbaulage des Filterelementes innerhalb der Filtervorrichtung definiert geführt und positioniert ist. Die genannten Nachteile lassen sich mit dem erfindungsgemäß aufgebauten Filterelement also mit Sicherheit vermeiden.

Bei einer bevorzugten Ausführungsform der erfindungsgemäßen Filtervorrichtung ist vorgesehen, dass die jeweilige elektrisch leitfähig ausgebildete Lage im Lagenverbund des Filtermediums aus einem ableitfähigen Filtermaterial oder aus einer leitfähigen Schutz- oder Stützlage gebildet ist. Besonders bevorzugt ist dabei vorgesehen, dass das jeweils ableitfähige Material oder die leitfähige Schutz- oder Stützlage aus Glas-, Karbon-, Meltblown- oder Metallfasermaterialien gebildet ist und dass die sonstigen Lagen des Filtermaterials aus nicht ableitfähigen Kunststoffmaterialien gebildet sind. Durch eine geeignete Kombination von leitfähigen Filtermateriallagen mit nicht ableitfähigen Lagen lässt sich für das Filtermedium als eine weitere Ausgestaltung auch eine Art Kondensatoraufbau erreichen, bei dem die genannten Lagen im Betrieb mindestens zwei ungleichartig geladene Körper bilden, die einen vorgebbaren Abstand voneinander einnehmen, die dann insoweit die Platten des Kondensators bilden, und das gegebenenfalls zwischen den Platten eingesetzte weitere Filterlagenmaterial bildet dann das sogenannte Dielektrikum eines solchen Kondensators aus. Dergestalt lassen sich besonders effektiv einzelne Ladungsträger oder Ladungen an zentraler Stelle sammeln und über die jeweilige Ableitbahn für einen elektrisch neutralen Betrieb des Filterelementes als Ganzes in Richtung des Masseanschlusses der Filtervorrichtung verbringen.

Sofern die leitfähigen Schutz- oder Stützlagen innerhalb des Filterelementmaterials eingesetzt werden, werden diese bevorzugt aus abriebfesten und stabilen Fasermaterialien ausgewählt, um dergestalt das ansonsten empfindliche Filtermaterial zu schützen und diesem für den späteren Filtrierbetrieb eine entsprechende Eigenstabilität zu verleihen, was insbesondere dann eine Rolle spielt, wenn das Element Druckpulsationen ausgesetzt ist, die mit hohen Belastungsspitzen einhergehen.

Für eine besonders gute Ableitung oder Abführung von Ladungsträgern ist vorgesehen, dass die jeweilige Ableitbahn der Ableiteinrichtung aus denselben Materialien besteht wie die jeweilige elektrisch leitfähig ausgebildete Lage des Filtermediums. Durch den Einsatz ein und desselben Materials sowohl für die Ableitbahn als auch für die elektrisch leitfähig ausgebildete Lage sind Ladungstrennungen vermieden und insoweit ein störungsfreier durchgehender Ladungsabtransport in Richtung der masseführenden Teile gewährleistet.

Besonders bevorzugt kann die jeweilige Ableitbahn dabei einstückiger Bestandteil der jeweils elektrisch leitfähig ausgebildeten Materialien des Filtermediums sein, es hat sich aber aus fertigungstechnischer Sicht heraus als Vereinfachung erwiesen, insbesondere wenn das Filtermedium in Form plissierter Filterlagen ausgebildet ist, erst nach Erstellen des Lagenverbundes die Ableitbahn mit diesem mittels Schweißen, Kleben oder Nähen fest zu verbinden, wobei auch mehrere Verbindungstechniken, beispielsweise Ultraschall-Schweißen und Nähen, gemeinsam eingesetzt werden können, um dergestalt einen besonders festen Verbund zu gewährleisten.

Bei einer besonders bevorzugten Ausführungsform der erfindungsgemäßen Filtervorrichtung ist vorgesehen, dass die jeweilige Ableitbahn sich über die gesamte Baulänge des Filtermediums erstreckt und entlang einer Verbindungslinie verläuft, an der die freien, einander zugewandten Stirnseiten des Filtermediums enden und entlang der diese Stirnseiten unter Bildung der Rohrform des Filtermediums fest miteinander verbunden sind. Eine dahingehende Bauweise bietet sich insoweit an, da ohnehin die einander benachbarten Stirnseiten des Filterelements unter Schließen des mittigen Öffnungsraumes miteinander zu verbinden sind, um dergestalt die hohlzylindrische Form für das Filtermedium zu erhalten. Insoweit bereitet es dann keine technische Schwierigkeit, die angesprochene Ableitbahn gleich in den dahingehenden Verbindungsbereich der Filterelementenden mit zu integrieren. Neben der bereits angesprochenen plissierten Rohrform lässt sich dergestalt die Ableitbahn auch in ein zylindrisches Filtermedienelement integrieren.

Soweit bevorzugt der Überstand der jeweiligen Ableitbahn über die Kontur des Filtermediums hinaus in etwa der Länge einer durchschnittlichen Filterfaltenhöhe des plissierten Filtermediums entspricht, wobei dieser Überstand rechtwinklig umgelegt und entlang einem Teil der Täler der Filterfalten verlaufend die Kontaktfläche für die Anlage mit dem elektrisch leitend ausgebildeten Stützrohr des Filterelementes bildet, hat sich eine praxisgerechte, leicht herzustellende Ableiteinrichtung ergeben, die eine zusätzliche Kontaktierung über die Täler der zuordenbaren Filterfalten erhält.

Die dahingehenden Ableiteffekte lassen sich noch verbessern, sofern die kappenartigen Abschlussteile oder Endkappen des Filterelementes elektrisch leitfähig ausgebildet sind, so dass dergestalt sowohl das jeweils mit den Endkappen in Anlage befindliche Stützrohr als auch die jeweilige Ableitbahn in weiteren Kontakt mit masseführenden Teilen der Ableiteinrichtung kommt, hier in Form der genannten Endkappen, die mit masseführenden Fluid-Anschlussstellen der Filtervorrichtung in leitender Verbindung stehen.

Sofern bevorzugt die jeweilige Ableitbahn zumindest teilweise fluiddurchlässig ausgebildet ist, insbesondere in der Art eines Gewebes, Gewirkes oder Gestrickes, ist diese zum einen hochfest belastbar und zum anderen ist aufgrund ihres fluiddurchlässigen Charakters die Funktionsfähigkeit des Filterelementes im Filtrierbetrieb nicht beeinträchtigt, da der Fluidstrom mit nur geringem Strömungswiderstand und daher nahezu ungehindert auch die Ableitbahn durchströmen kann. So kann die Filter- oder Porenstruktur der jeweiligen Ableitbahn zum einen an die zu erwartende Partikelverschmutzung angepasst werden und zum anderen ist die Durchlassgröße jedenfalls derart gewählt, dass die Durchströmung nicht behindert ist und dennoch eine gute Ableitung über die Ableitbahn erfolgen kann.

Nachstehend ist die Erfindung anhand mehrerer in der Zeichnung dargestellter Ausführungsbeispiele näher erläutert. Dabei zeigen in prinzipieller und nicht maßstäblicher Darstellung:
- Fig. 1: in der Art einer Schnittdarstellung eine stark generalisierte Ansicht auf eine Filtervorrichtung mit einem in einem Gehäuse aufgenommenen Filterelement;
- Fig. 2: in einer perspektivischen Darstellung das in der Filtervorrichtung nach der Fig. 1 aufgenommene Filterelement als handelbare Transport- und Austauscheinheit;
- Fig. 3: in der Art einer Explosionsdarstellung eine perspektivische Ansicht auf den oberen Abschnitt des Filterelementes nach der Fig. 2;
- Fig. 4 und 5: ausschnittsweise einen Querschnitt durch ein Filtermedium mit jeweils anderem Lagenaufbau, wie es für ein Filterelement nach der Fig. 2 einsetzbar ist;
- Fig. 6: in einer perspektivischen Darstellung und in stirnseitiger Ansicht ein plissiertes, mehrlagiges Filtermedium mit angesetzter Ableitbahn; und
- Fig. 7 und 8: in verschiedenen Herstellstadien eine stirnseitige Ansicht auf das Filtermedium, einmal ohne und einmal mit Stützrohr sowie mit unterschiedlicher Anschlusstechnik der Ableitbahn an die Lagen des Filtermediums.

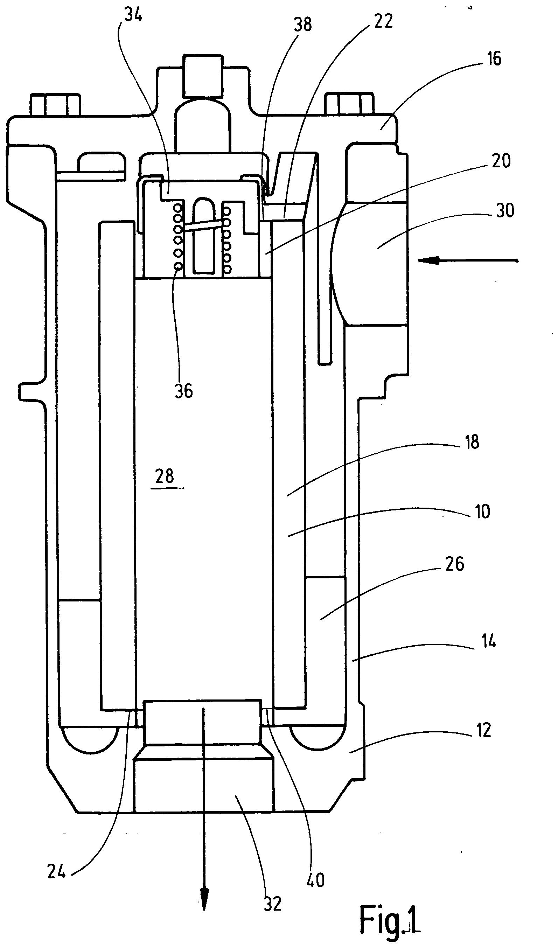

Die Fig. 1 zeigt eine Filtervorrichtung als Ganzes mit einem Filterelement 10, das in einem Gehäuse 12 aufgenommen ist, das zweiteilig ausgebildet einen Filtertopf 14 und einen mit diesem verschraubten Filterkopf 16 aufweist, in welchem das Filterelement 10 angeordnet ist, das ein rohrförmiges Filtermedium 18 aufweist, das sich innenumfangsseitig an einem perforierten Stützrohr 20 abstützt, das in der Fig. 1 nur teilweise und exemplarisch wiedergegeben ist. Das genannte Filtermedium 18 sowie das innenumfangsseitig angeordnete Stützrohr 20 erstrecken sich zwischen zwei kappenartigen Abschlussstellen 22, 24 in Form von üblich ausgestalteten Endkappen, an denen die vorstehend genannten Komponenten 18, 20 jeweils stirnseitig in Anlage kommen. Das üblicherweise aus mehreren plissierten oder gefalteten Filterlagen bestehende Filtermedium 18 ist im Betrieb der Filtervorrichtung von einem abzureinigenden Fluid, insbesondere in Form von Hydrauliköl durchströmbar, und das Filterelement 10 als Ganzes separiert in seiner in der Fig. 1 gezeigten Einbaulage einen sogenannten Unfiltratraum 26 von einem Filtratraum 28.

Im Betrieb der Filtervorrichtung wird über eine Fluid-Einlassstelle 30, die im Filtertopf 14 angeordnet ist, ungereinigtes Fluid der Filtervorrichtung zugeführt, und nach Passieren des Filtermediums 18 des Filterelementes 10 wird das vom Unfiltratraum 26 einströmende Fluid bedarfsweise von Partikelverschmutzungen über das Filtermedium 18 des Filterelements 10 abgereinigt, wobei das derart abgereinigte Fluid dann über den Filtratraum 28 und die bodenseitig im Gehäuse 12 angeordnete Fluid-Auslassstelle 32 die Filtervorrichtung verlässt. Es ist selbstredend, dass die Filtervorrichtung für die dahingehende Fluidführung, die in Fig. 1 mit Pfeilen angedeutet ist, an einen nicht näher dargestellten Hydraulikkreis in üblicher und daher nicht näher beschriebener Weise angeschlossen ist.

Kommt es zu einem sogenannten Verblocken des Filterelementes 10, sind also entsprechend die Filterlagen des Filtermediums 18 von Partikelverschmutzungen zugesetzt, was gegebenenfalls über einen Differenzdrucksensor (nicht dargestellt) auch elektronisch erfasst werden kann, öffnet das in Blickrichtung auf die Fig. 1 gesehen im oberen Bereich am Filterelement 10 angeordnete Bypassventil 34 entgegen der Wirkung einer Druckfeder 36, so dass dann über den derart geschaffenen Umgehungs- oder Bypassweg das dann ungefilterte Fluid von der Eingangsseite oder vom Unfiltratraum 26 her unter Passieren des Bypassventiles 32 direkt in den Filtratraum 28 des Filterelementes 10 gelangt und bodenseitig wie bereits beschrieben über die Fluid-Auslassstelle 32 die Filtervorrichtung verlässt. Mit der angesprochenen Bypassführung ist es möglich, den erwähnten angeschlossenen Hydraulikkreis weiter mit Fluid zu versorgen, um Betriebsausfälle von an den hydraulischen Kreis angeschlossenen Maschinenkomponenten zu vermeiden. Da das Filterelement 10 im üblichen Normalbetrieb bereits vor einem etwaigen Verblocken eine entsprechend große Anzahl an Partikelverschmutzungen aus dem Fluidstrom abgereinigt hat, ist auch im Fall des Verblockens der verbleibende Fluidstrom regelmäßig insoweit bereits derart hinreichend abgereinigt, dass Störungen der an die Filtervorrichtung angeschlossenen hydraulischen Komponenten regelmäßig nicht zu befürchten sind.

Durch Lösen des Filterkopfes 16 an dem regelmäßig stationär im Hydraulikkreis angeordneten Filtertopf 14 und Abnehmen desselben lässt sich dann ein verbrauchtes Filterelement 10 im Bedarfsfall gegen ein Neuelement tauschen, um dann nach Verschließen des Filtertopfes 14 mit dem Filterkopf 16 einen erneuten Betrieb der hydraulischen Anlage zu starten. Um den jeweils angesprochenen Fluidkreislauf (Normalbetrieb / Bypassbetrieb) sicherstellen zu können, ist das Filterelement 10 endkappenseitig mit zentral angeordneten zylindrischen Öffnungen 38, 40 versehen, deren Querschnitte einmal die Aufnahme des Bypassventils 34 erlauben und zum anderen einen entsprechend großen Fluidquerschnitt freigeben für die Abfuhr des abgereinigten Fluids auf der Bodenseite des Filtertopfes 14 über die Fluid-Auslassstelle 32.

Die genannten Endkappen 22, 24 des Filterelementes 10 sind regelmäßig aus elektrisch ableitfähigen Materialien gebildet wie beispielsweise Metallwerkstoffen oder aus Kunststoffmaterialien, die mit entsprechend leitfähigen Partikeln wie Karbon-Nanopartikeln beschichtet sind, die aber auch intrinsisch in das Endkappenmaterial eingebracht sein können. Die dahingehenden leitfähigen oder ableitfähigen Endkappen 22, 24 sind dann zum Herstellen eines ableitfähigen elektrischen Kontakts mit den Metallstrukturen des Filtergehäuses 12 der Filtervorrichtung entsprechend in Verbindung, die allesamt Komponenten einer Ableiteinrichtung 42 ausbilden, deren erfindungsgemäße Ausgestaltung im Folgenden noch näher beschrieben werden wird.

Wie des Weiteren die Darstellung nach der Fig. 1 zeigt, braucht, sofern das Filterelement 10 in Blickrichtung auf die Fig. 1 gesehen nur kopfseitig über seine dortige obere Endkappe 22 im Filtergehäuse 12 festgelegt ist, auch nur diese eine Anbindungsstelle insoweit ableitfähig ausgebildet sein, und das untere Endkappenelement 24 benötigt bereits zur Vermeidung von statisch überbestimmten Lagerstellen keine weitere Anlage mit dem Filtergehäuse 12. Wie nun im Sinne der erfindungsgemäßen Ausgestaltung das Filterelement 10 seinen Ladungstransport in Richtung der beschriebenen masseführenden Teile in Form von Endkappen 22, 24 und Gehäuseteilen 14, 16 als Komponenten der Ableiteinrichtung 42 ermöglicht, wird nachfolgend im Näheren beschrieben.

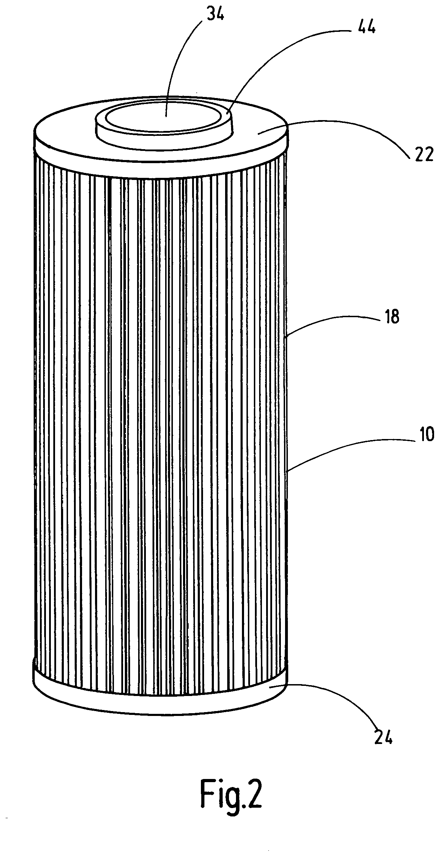

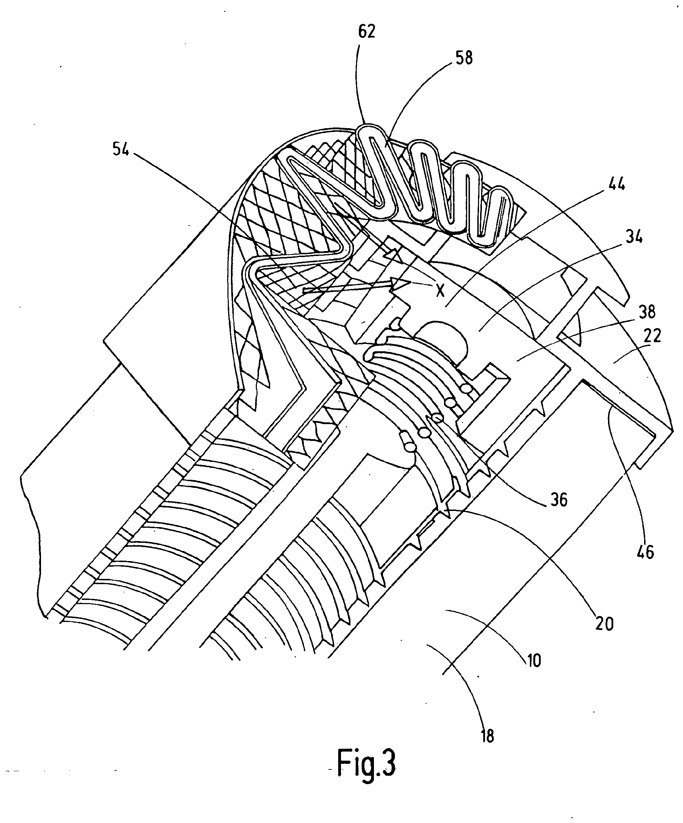

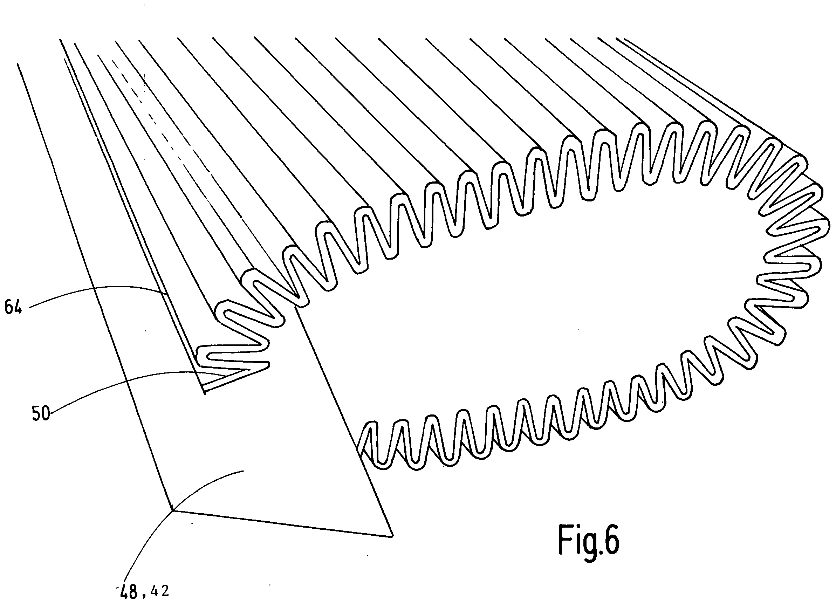

Das in der Fig. 2 gezeigte, als Austauschelement für eine Filtervorrichtung nach der Fig. 1 konzipierte Filterelement 10 zeigt das zwischen der oberen mit einer Aufnahme 44 für das Bypassventil 36 versehene Endkappe 22 und der unteren Endkappe 24 sich erstreckende, plissierte Filtermedium 18 von außen her. Bei einem Standard-Filterelement ist zum Verbinden der beiden Endkappen 22, 24 mit den einander gegenüberliegenden freien Stirnseiten des Filtermediums 18 ein Klebstoffbett 46 (vgl. Fig. 3) vorgesehen, das regelmäßig aus einem Zwei-Komponenten-Klebstoff besteht, der als elektrischer Isolator fungiert und in den auch die stirnseitigen Enden des Stützrohres 20 regelmäßig mit aufgenommen sind, für eine dauerhafte Verbindung mit der jeweiligen Endkappe 22, 24 zur Komplettierung des Filterelementes 10 als Ganzes. Aufgrund der über das Klebstoffbett 46 hergestellten Isolierung ist es demgemäß notwendig, für eine Kontaktierung der jeweiligen im Einzelnen noch aufzuzeigenden Ableitbahn 48 (vgl. Fig. 6 ff.) innerhalb des Filtermediums 18 die Ableiteinrichtung 42 als Gesamtheit jedenfalls derart auszugestalten, dass eine möglichst widerstandsfreie Ableitung über die Gehäuseteile 12 der Filtervorrichtung möglich ist.

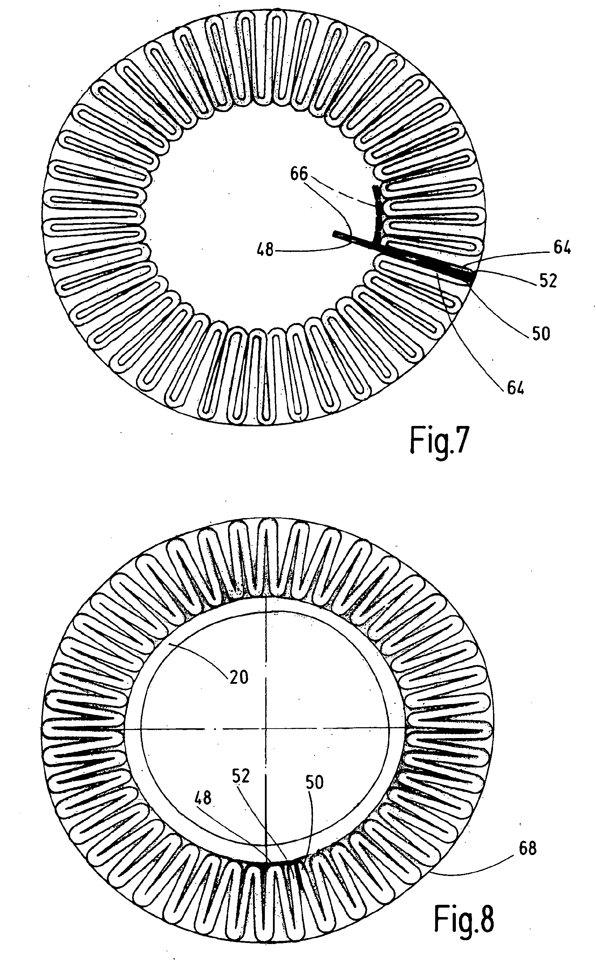

Sofern die Endkappen 22, 24 üblicherweise aus metallischen Materialien bestehen, die insoweit grundsätzlich elektrisch leitfähig sind, lässt sich die elektrische Ableitung gewährleisten, indem man beispielsweise die jeweils für die Ableitung vorgesehene Endkappe, hier die obere Endkappe 22, mit einem nach unten hin in Richtung der unteren Endkappe 24 vorspringenden Innenflanschteil (nicht dargestellt) versieht, der in direkten Kontakt mit der jeweiligen Ableitbahn 48 des Filtermediums 18 oder mit dem leitfähig ausgebildeten Innen-Stützrohr 20 (vgl. Fig. 1 und 3) gelangt. Eine andere Möglichkeit besteht darin, die jeweilige Ableitbahn 48 direkt oder indirekt über das Stützrohr 20 mit metallischen Führungsteilen der Aufnahme 44 für das Bypassventil 34 (vgl. Fig. 1) für die Ableitung zu verbinden. Eine weitere, anders geartete Möglichkeit besteht darin, wie dies beispielhaft in der DE 10 2004 005 202 A1 aufgezeigt ist, die jeweils ableitende Endkappe 22, 24 mit Kontaktstiften zu versehen, die dann die Kontaktierung mit der jeweiligen Ableitbahn 48 des Filtermediums 18 zu den Gehäuseteilen 12 der Filtervorrichtung sicherstellen. Zusätzlich oder alternativ kann auch eine Ableitung, wie dies in der DE 102 35 275 A1 beispielhaft in Fig. 8 aufgezeigt ist, über eine metallische Klammer vorgenommen werden, die der Aufnahme eines weiteren Klebstoffbettes dient zwecks Aneinanderhalt der freien benachbarten stirnseitigen Enden 50, 52 (vgl. Fig. 7) des rohrförmig konzipierten Filtermediums 18, wobei die dahingehende Klammer dann wieder mit der jeweiligen Ableitbahn 46 zu kontaktieren ist sowie mit masseführenden oder sonstigen ableitfähigen Gehäuse- bzw. Endkappenteilen.

Die vorstehend angesprochenen Verbindungsmöglichkeiten für die elektrische Ableitung statischer Aufladung des Filterelements 10 an masseführende Komponenten des Filtergehäuses 12 ist nur beispielhaft und soll nur exemplarisch den Aufbau solcher Elemente und Vorrichtungen verdeutlichen. Die vorstehend beschriebenen Baumöglichkeiten für eine Ableiteinrichtung 42 können auch dann eingesetzt werden, wenn für das Stützrohr 20 und/oder für die jeweilige Endkappe 22, 24 Kunststoffmaterialien zum Einsatz kommen, die grundsätzlich als Isolator fungieren, vergleichbar dem angesprochenen Klebstoffbett 46; die jedoch dann elektrisch leitfähig auszubilden sind, beispielsweise unter Einsatz eines Karbonwerkstoffs oder elektrisch leitfähiger Beschichtungen (nicht dargestellt). Ferner besteht die Möglichkeit, grundsätzlich auf das beschriebene Klebstoffbett 46 völlig zu verzichten, sofern Endkappen 22, 24 aus Kunststoffmaterialien zum Einsatz kommen, die dann mit dem Filtermedium 18 beispielsweise mittels eines Laser-Durchstrahlschweißverfahrens miteinander verbunden werden können, wie es in der bereits benannten WO 2013/120568 A1 der Fall ist, insbesondere unter Einsatz von leit- und schweißfähigen Schichtzusätzen zwischen den einander zugewandten Stirnseiten der jeweiligen Endkappe 22 oder 24 und des Filtermediums 18.

Aufgrund der hohen Schmutzaufnahmekapazität wird gemäß der Darstellung nach der Fig. 2 das Filtermedium 18 grundsätzlich plissiert ausgebildet; es besteht aber auch die Möglichkeit eines zylindrisch gewickelten oder sonstigen Aufbaus; wobei das Filterelement jeweils als Ganzes auch unterschiedliche Querschnittsformen (nicht dargestellt) aufweisen kann, in Form eines quadratischen oder ovalen Aufbaus oder in der Art eines Reuleaux-Polygons (s. hierzu auch DE 10 2004 026 862 A1) etc.

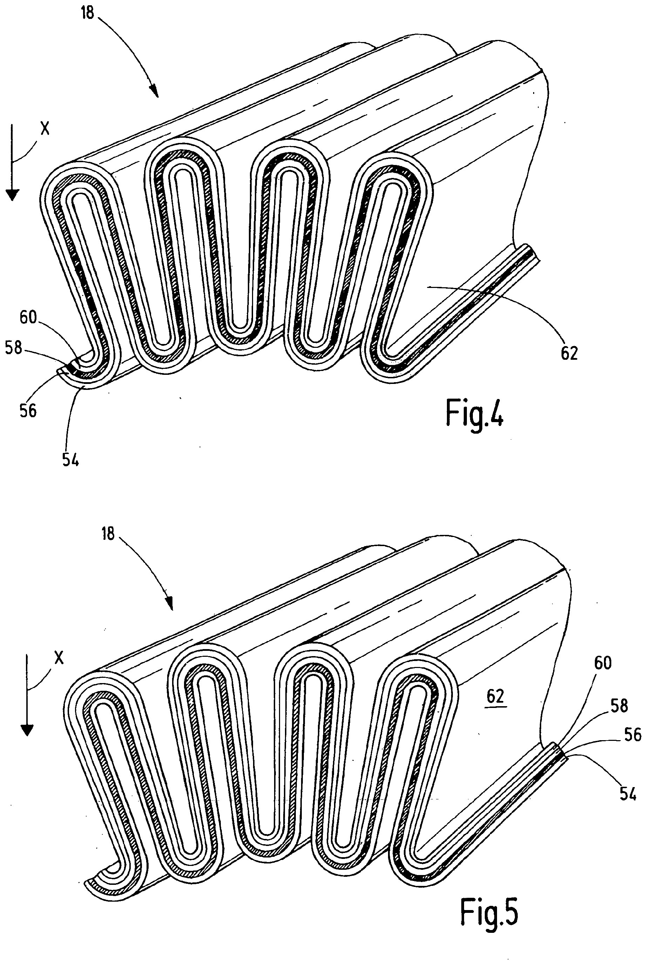

Wie insbesondere die beiden Ausführungsbeispiele nach den Figuren 4 und 5 zeigen, besteht das Filtermedium 18 aus mehreren Filterlagen 54, 56, 58, 60 und 62. Das Filtermedium 18 wird in der gezeigten Pfeilrichtung X von außen nach innen durchströmt. Dabei bildet die Lage 62 eine nicht ableitfähige Drainagelage auch in Form eines Kunststoffgitters aus, wie dies beispielhaft in der Fig. 3 aufgezeigt ist. Die nachfolgende Filterlage 60 ist eine Schutzlage, die bei besonderem Lagenaufbau auch entfallen kann. Die mittlere Lage 58 besteht aus einem ableitfähigem Filtermaterial, beispielsweise aus speziellen Statfree®-Glaspapieren, leitfähigen Meltblown-Faserlagen, Karbonfasermaterial, Metallfaserlagen oder Metallgittern etc. Die daran angrenzende weitere Filterlage 56 ist wiederum wie die Lage 60 eine optionale Schutzlage, an der sich die zuinnerst liegende nicht ableitfähige Drainagelage 54 anschließt, die wiederum auch aus einem Kunststoffgitter bestehen kann. Dieser innersten Filterlage 54 im Lagenverbund gemäß der Darstellung nach der Fig. 4 liegt also die äußere Medienlage 62 auf der Anströmseite gegenüber und die am Stützrohr 20 anliegende Filterlage 54 bildet mithin die Abströmseite des Filtermediums 18.

Die Lösung nach der Fig. 5 zeigt einen entsprechenden Lagenaufbau wie die Ausführungsform nach der Fig. 4 mit dem Unterschied, dass die zweitunterste Schicht 56, in Richtung der Stützrohranlage gesehen, nunmehr leitfähig ist und eine leitfähige Schutzlage 56 ausbildet entsprechend mit Materialien aufgebaut, wie für die ableitfähige Filterschicht 58 in der Fig. 4 angegeben. Die zuoberst liegende Schicht 62 und die zuunterst liegende Schicht 54 bilden wiederum nicht ableitfähige Drainagelagen auch in Form eines Kunststoffgitters aus. Die zuunterst und benachbart zu der Lage 62 angeordnete Lage 60 stellt wiederum eine optionale Schutzlage dar und im Medienverbund nach der Fig. 5 besteht die Lage 58 diesmal aus nicht ableitfähigen Filtermaterialien wie Standardglaspapieren, Faserlagen etc.. Bei beiden Lösungen nach den Figuren 4 und 5 wird aber zum einen die ableitfähige Filterlage 58 ebenso wie die leitfähige Schutzlage 56 in Form einer Ableitbahn 48 (vgl. beispielsweise Fig. 6) nach außen vorstehend aus dem Lagenverbund des Filtermediums 18 herausgeführt, um dergestalt die Kontaktierung mit der Gesamt-Ableiteinrichtung 42 zu ermöglichen.

Zwar ist es Stand der Technik, den Aufbau von Filterelementen mit beidseitig oder nur abströmseitig vorhandenen metallischen Drahtgeweben, Kunststoffgeweben oder auch Kunststoffgittern auszuführen, was jedoch mit entsprechenden Nachteilen behaftet ist. Zwar weisen metallische Drahtgewebe per se schon eine ausreichend hohe Leitfähigkeit zur Ableitung der entstehenden elektrostatischen Aufladung auf und können somit einen Kontakt zwischen leitfähigen Lagen und anderen Filterelementbauteilen wie Stützrohren und Endkappen herstellen; jedoch ist es dann zwingend erforderlich, dass diese leitfähigen Lagen auch einen direkten Kontakt zu den metallischen Geweben aufweisen. In der Regel werden jedoch im Lagenaufbau des Filtermediums nicht leitfähige Vliesstoffe (non-wovens) zur Abstützung der leitfähigen Lagen eingesetzt, wodurch ein dahingehend direkter leitfähiger Kontakt gerade verhindert wird.

Beim Einsatz von nicht leitfähigen Kunststoffgeweben besteht darüber hinaus die Möglichkeit, leitfähige Fäden einzuweben, die den Ladungstransport bewerkstelligen oder es besteht die Möglichkeit der Aufbringung entsprechend leitfähiger Schichten (coatings), was auch über Plasmabeschichtungsverfahren (CVD) verwirklicht werden kann, um dergestalt eine Ableitfähigkeit zu erzielen. Letzteres gilt auch für den Einsatz von nicht leitfähigen Kunststoffgittern. Die Einschränkung hinsichtlich nicht möglicher Kontaktierung durch andere in der Filtermatte befindlicher isolierender Schichten bleibt jedoch bestehen. Ein weiterer Nachteil ist, dass die erwähnte Lösung zu einem erheblichen Mehraufwand und mithin Kosten führen kann. Auch verhindern metallische Drahtgewebe oder Kunststoffgewebe durch die nicht zu verhindernde Fadenvereinzelung die Möglichkeit, Fertigungsabläufe im Rahmen des Elementbaus zu automatisieren. Diese vereinzelten Fäden müssen im Stand der Technik immer wieder manuell entfernt werden und stellen so eine große Störungsquelle im Herstellprozess für die Filterelemente dar.

Die Fadenvereinzelung wird sinnvollerweise durch den Einsatz von Materialien, die an den Kreuzungspunkten der einzelnen Fäden miteinander verbunden sind, verhindert. Diese sind bevorzugt als Kunststoffgitter konzipiert, die jedoch heute nicht in einer ableitfähigen Version am Markt mit den entsprechenden Eigenschaftsmerkmalen für die Elementherstellung zur Verfügung stehen. Mit dem erfindungsgemäßen Lagenaufbau, wie er beispielhaft in den Figuren 4 und 5 aufgezeigt ist, besteht die Möglichkeit, nicht leitfähige Support- und Drainage-Lagen einzusetzen und dennoch eine Ableitung der generierten elektrischen Ladung, in diesem Fall über die Lagen 58 bzw. 56, zu gewährleisten. Erzielt wird dies durch die Verwendung eines leitfähigen Kontaktstreifens als Ableitbahn 48, der bevorzugt als einstückiger Teil der jeweiligen Lage 58 bis 56 vorstehend aus dem plissierten Lagenverbund herausgeführt ist oder indem dieser als eigenständiges Bauteil (Fig. 6) mit dem Lagenverbund in Verbindung gebracht, insbesondere die Ableitung dann über die Lagen 58 bzw. 56 ermöglicht. Auf jeden Fall wird über die jeweilige Ableitbahn 48 sichergestellt, dass die leitfähigen Lagen, hier 58 und 56, in der Filtermatte respektive dem Filtermedium 18 durch den ableitbahnförmigen Kontaktstreifen 48 auch kontaktiert werden. Durch den angesprochenen Überstand 66 des Kontaktstreifens in Form der Ableitbahn 48, insbesondere ins Innere der Filtermatte vorstehend, wird das Stützrohr 18 und/oder die zumindest eine Endkappe, hier die obere Endkappe 22, entsprechend elektrisch kontaktiert und mit der leitfähigen Lage innerhalb des Filtermediums 18 im Wesentlichen widerstandsfrei verbunden. Hierdurch ist eine sichere Ableitung der in dem Filtermedium 18 respektive der Filtermatte erzeugten elektrischen Ladung gewährleistet.

Die Fig. 6 zeigt nunmehr in einer perspektivischen Ansicht den einen Endbereich des an sich zylindrisch aufgebauten Filtermediums 18, der jedoch aufgrund des fehlenden Stützrohrs 20 eine flache ovale Form einnimmt, was bedingt ist durch die Nachgiebigkeit der Filtermateriallagen. An den freien einander benachbarten stirnseitigen Längsrändern 64 des Filtermediums 18 (siehe auch Fig. 7) wird die Ableitbahn 48 insbesondere mit dem nach innen vorstehenden Überstand 66 angenäht, der dem Grunde nach aber auch nach außen über das Filterelement vorstehen kann sowie beidseitig nach oben in Richtung der jeweiligen Endkappe 22, 24. Anstelle einer konventionellen Nahtverbindung könnte auch ein übliches Schweißverfahren wie ein Ultraschweißverfahren treten; die Ableitbahn 48 könnte aber auch in eine übliche, nicht näher dargestellte Verbindungsklammer für die Längsränder des Filterelementes nach innen vorstehend eingegossen werden. Wichtig ist jedoch, dass die Ableitbahn flächig in Kontakt kommt mit der jeweils leitfähigen Lage 56 (Fig. 5) bzw. 58 (Fig. 4). Die dahingehende Situation ist auch in der Fig. 7 dargestellt, die eine stirnseitige Ansicht auf das Filtermedium 18 mit Ableitbahn 48 wiedergibt, die mit einem Überstand 66 ins Innere des Filterelementes vorsteht. Da die Ableitbahn 48 wie eine Stofflage nachgiebig ist und bevorzugt aus denselben Materialien aufgebaut ist, wie die leitfähigen Schichten oder Lagen 58 (Fig. 4) oder 56 (Fig. 5), kann das freie, nach innen ins Filterelement vorstehende Ende in Blickrichtung auf die Fig. 7 entgegen dem Uhrzeigersinn umgelegt werden (strichlinierter Verlauf 66), so dass gemäß der Darstellung nach der Fig. 8 bei eingebrachtem Stützrohr 20 dann der Überstand 66 der Ableitbahn 48 in flächige Anlage mit dem leitfähigen Stützrohr 20 als Teil der Ableiteinrichtung 42 gelangt.

Es ist selbstredend, dass die Ableitbahn 48 in Umfangsrichtung des Filterelementes 10 oder des Filtermediums 18 gesehen an mehreren Stellen vorhanden sein könnte oder dass in Hintereinanderfolge in Längsrichtung des zylindrischen Filtermediums 18 gesehen mehrere streifenförmige Ableitbahnen (nicht dargestellt) vorhanden sind. Sofern das Filtermedium 18 von einem äußeren zylindrischen Stützmantel 68 umgeben sein sollte, der gleichfalls elektrisch leitfähig, insbesondere metallisch ausgebildet sein kann, wäre es auch möglich, bei dem in der Fig. 6 gezeigten nach außen vorstehenden Überstand die Ableitbahn nach außen zusätzlich oder alternativ mit einem dahingehenden Stützmantel 68 elektrisch zu kontaktieren. Für die jeweilige Ableitbahn 48 ist eine geeignete fluiddurchlässige Gewebebahn vorzusehen, die auch aus einem Wirkvlies oder dergleichen sowie einem Gewirke oder Gestricke bestehen kann. Im Ausführungsbeispiel nach der Fig. 6 ist ein Karbon-non woven-Streifen als Ableitbahn 48 exemplarisch eingesetzt worden.

In Praxisversuchen hat sich gezeigt, dass mit der erfindungsgemäßen Lösung eine sehr effiziente Ableitung elektrischer Aufladungen aus dem Filtermedium 18 heraus in leitend ausgebildete Gehäuseteile des Filterelementes 10 möglich ist. Dies hat so keine Entsprechung im Stand der Technik.

## Patentansprüche

1. Filtervorrichtung mit einem zumindest teilweise in einem Gehäuse (12) aufnehmbaren Filterelement (10), das ein rohrförmiges Filtermedium (18) aufweist, das sich an mindestens einem Stützrohr (20) abstützt und mit seinen gegenüberliegenden Stirnseiten zwischen zwei kappenartigen Abschlussstellen (22, 24) erstreckt, das im Betrieb von einem abzureinigenden Fluid durchströmbar ist und mit seinem Innen- und Außenumfang zwei Fluidräume (26, 28) voneinander separiert, und das eine elektrisch leitfähige Ableiteinrichtung (42) aufweist, die mit mindestens einer Ableitbahn (48) über die Kontur des Filtermediums (18) vorsteht, **dadurch gekennzeichnet, dass** die Ableiteinrichtung (42) mit ihrer jeweiligen Ableitbahn (48) zwischen den Stirnseiten des Filtermediums (18) am Außen- und/oder Innenumfang desselben angeordnet ist und dass die Ableitbahn (48) unter Anlage mit dem jeweils zuordenbaren Stützrohr (20) zwischen diesem und dem Filtermedium (18) verläuft.

2. Filtervorrichtung nach Anspruch 1, **dadurch gekennzeichnet, dass** das Filtermedium (18) aus mehreren Filterlagen (54, 56, 58, 60, 62) mit zumindest teilweiser unterschiedlicher Funktionalität gebildet ist, von denen mindestens eine Lage (58; 56) elektrisch leitfähig ausgebildet mit der jeweils zuordenbaren Ableitbahn (48) in Verbindung steht.

3. Filtervorrichtung nach Anspruch 2, **dadurch gekennzeichnet, dass** die jeweilige elektrisch leitfähig ausgebildete Lage im Lagenverbund des Filtermediums (18) aus einem ableitfähigen Filtermaterial (58) oder aus einer leitfähigen Schutz- (56) oder Stützlage gebildet ist.

4. Filtervorrichtung nach Anspruch 3, **dadurch gekennzeichnet, dass** das jeweils ableitfähige Filtermaterial (58) oder die leitfähige Schutz- (56) oder Stützlage aus Glas-, Carbon-, Meltblown- oder Metallfasermaterialien gebildet ist und dass die sonstigen Lagen des Filtermaterials aus nicht-ableitfähigen Kunststoffmaterialien gebildet sind.

5. Filtervorrichtung nach einem der Ansprüche 2 bis 4, **dadurch gekennzeichnet, dass** die jeweilige Ableitbahn (48) aus denselben Materialien besteht, wie die jeweilige elektrisch leitfähig ausgebildete Lage (56; 58) des Filtermediums.

6. Filtervorrichtung nach einem der Ansprüche 3 bis 5, **dadurch gekennzeichnet, dass** die jeweilige Ableitbahn (48) einstückiger Bestandteil der jeweils elektrisch leitfähig ausgebildeten Materialien des Filtermediums (18) ist, vorzugsweise jedoch nach Erstellen des Lagenverbundes mit diesem mittels Schweißen, Kleben oder Nähen fest verbunden ist.

7. Filtervorrichtung nach einem der vorstehenden Ansprüche, **dadurch gekennzeichnet, dass** die jeweilige Ableitbahn (48) sich über die gesamte Baulänge des Filtermediums (18) erstreckt und entlang einer Verbindungslinie verläuft, an der die freien, einander zugewandten Stirnseiten (64) des Filtermediums (18) enden und entlang der diese Stirnseiten (64) unter Bildung der Rohrform miteinander fest verbunden sind.

8. Filtervorrichtung nach einem der vorstehenden Ansprüche, **dadurch gekennzeichnet, dass** die Rohrform des Filtermediums (18) aus einem plissierten Verlauf der einzelnen aneinander liegenden Filterlagen (54-62) gebildet ist.

9. Filtervorrichtung nach Anspruch 8, **dadurch gekennzeichnet, dass** der Überstand (66) der jeweiligen Ableitbahn (48) über die Kontur des Filtermediums (18) hinaus in etwa der Länge einer durchschnittlichen Filterfaltenhöhe des plissierten Filtermediums (18) entspricht und dass dieser Überstand (66) rechtwinklig umgelegt (Fig. 7) und entlang einem Teil der Täler der Filterfalten verlaufend die Kontaktfläche für die Anlage mit dem elektrisch leitend ausgebildeten Stützrohr (20) des Filterelementes (10) bildet.

10. Filtervorrichtung nach einem der vorstehenden Ansprüche, **dadurch gekennzeichnet, dass** zumindest einer der beiden kappenartigen Abschlussteile (22, 24) elektrisch leitfähig ausgebildet ist und zumindest eine leitende Kontaktstelle mit der jeweiligen Ableitbahn (48) aufweist.

11. Filtervorrichtung nach einem der vorstehenden Ansprüche, **dadurch gekennzeichnet, dass** die jeweilige Ableitbahn (48) zumindest teilweise fluiddurchlässig ausgebildet ist, insbesondere in der Art eines Gewebes, Gewirkes oder Gestrickes.

## Claims

1. A filter device with a filter element (10) which can be at least partly received in a housing (12), which filter element has a tubular filter medium (18) which is supported on at least one support tube (20) and extends with its opposing front ends between two cap-like connection points (22, 24), through which filter medium a fluid to be cleaned can flow during operation and which filter medium separates two fluid spaces (26, 28) from one another with its inner and outer circumference, and which filter medium has an electrically conductive discharge device (42) which projects over the contour of the filter medium (18) with at least one discharge path (48), **characterised in that** the discharge device (42) is arranged with its respective discharge path (48) between the front ends of the filter medium (18) on the outer and/or inner circumference of same, and that, accompanied by the attachment to the respectively allocatable support tube (20), the discharge path (48) runs between this and the filter medium (18).

2. The filter device according to claim 1, **characterised in that** the filter medium (18) is formed from several filter layers (54, 56, 58, 60, 62) with at least partially different functionality, of which at least one layer (58; 56) is designed electrically conductively connected to the respectively allocatable discharge path (48).

3. The filter device according to claim 2, **characterised in that** the respective electrically conductively designed layer is formed in the layer bond of the filter medium (18) from a dischargeable filter material (58) or from a conductive protective (56) or support layer.

4. The filter device according to claim 3, **characterised in that** the respectively dischargeable filter material (58) or the conductive protective (56) or support layer is formed from glass, carbon, melt-blown or metal-fibre materials, and that the other layers of the filter material are formed from non-dischargeable plastic materials.

5. The filter device according to one of claims 2 to 4, **characterised in that** the discharge path (48) consists of the same materials as the respective electrically conductively designed layer (56; 58) of the filter medium.

6. The filter device according to one of claims 3 to 5, **characterised in that** the respective discharge path (48) is an integral component of the respectively electrically conductively designed materials of the filter medium (18), and is firmly connected to same by means of welding, sticking or sewing, preferably, however, after producing the layer bond.

7. The filter device according to one of the preceding claims, **characterised in that** the respective discharge path (48) extends over the whole length of the filter medium (18) and runs along a connecting line at which terminate the free front faces (64) of the filter medium (18) which face one another, and along which these front ends (64) are firmly connected to one another, accompanied by the formation of the tubular shape.

8. The filter device according to one of the preceding claims, **characterised in that** the tubular shape of the filter medium (18) is formed from a pleated progression of the individual adjacent filter layers (54-62).

9. The filter device according to claim 8, **characterised in that** the projection (66) of the respective discharge path (48) over the contour of the filter medium (18) corresponds approximately to the length of an average filter fold height of the pleated filter medium (18) and that this projection (66), shifted orthogonally (Fig. 7) and running along a part of the valleys of the filter folds, forms the contact surface for attachment to the electrically conductive support tube (20) of the filter element (10).

10. The filter device according to one of the preceding claims, **characterised in that** at least one of the two cap-like connection points (22, 24) is designed electrically conductive and has at least one conductive contact point with the respective discharge path (48).

11. The filter device according to one of the preceding claims, **characterised in that** the respective discharge path (48) is designed at least partly fluid-permeable, in particular in the manner of a textile, stitch bonded fabric or knitted fabric.

## Revendications

1. Dispositif de filtration, comprenant un élément (10) filtrant, qui peut être reçu, au moins en partie, dans une enveloppe (12) et qui a un milieu (18) filtrant tubulaire, qui s'appuie sur au moins un tube (20) d'appui et qui s'étend, par ses côtés frontaux opposés, entre deux points (22, 24) de fermeture de type en coiffe, qui, en fonctionnement, peut être traversé par un fluide à épurer et qui sépare l'un de l'autre, par son pourtour intérieur et extérieur, deux espaces (26, 28) pour du fluide et qui a un dispositif (42) de décharge conducteur de l'électricité, qui dépasse par au moins une voie (48) de décharge du contour du milieu (18) filtrant, **caractérisé en ce que** le dispositif (42) de décharge est disposé par sa voie (48) de décharge respective entre les côtés frontaux du milieu (18) filtrant sur le pourtour extérieur et/ou intérieur de celui-ci et **en ce que** la voie (48) de décharge s'étend, en s'appliquant sur le tube (20) d'appui pouvant lui être associé, entre celui-ci et le milieu (18) filtrant.

2. Dispositif de filtration suivant la revendication 1, **caractérisé en ce que** le milieu (18) filtrant est formé de plusieurs couches (54, 56, 58, 60, 62) filtrantes, ayant une fonctionnalité différente, au moins en partie, parmi lesquelles au moins une couche (58; 56) conductrice de l'électricité est en liaison avec la voie (48) de décharge pouvant lui être associée.

3. Dispositif de filtration suivant la revendication 2, **caractérisé en ce que** la couche conductrice de l'électricité est formée, dans le composite de couches du milieu (18) filtrant, d'une matière (58) filtrante apte à être déchargée ou d'une couche de protection (56) ou d'appui conductrice.

4. Dispositif de filtration suivant la revendication 3, **caractérisé en ce que** la matière (58) filtrante apte à être déchargée ou la couche de protection (56) ou d'appui conductrice est en verre, en carbone, en fibre meltblown ou en fibres métalliques et **en ce que** les autres couches de la matière filtrante sont en matières plastiques non susceptibles d'être déchargées.

5. Dispositif de filtration suivant l'une des revendications 2 à 4, **caractérisé en ce que** la voie (48) de décharge est en les mêmes matières que la couche (56; 58) conductrice de l'électricité du milieu filtrant.

6. Dispositif de filtration suivant l'une des revendications 3 à 5, **caractérisé en ce que** la voie (48) de décharge est une partie constitutive d'une seule pièce des matières conductrices de l'électricité du milieu (18) filtrant, mais, de préférence, après la production du composite de couches, est assemblée fixement à celui-ci au moyen d'une soudure, d'un collage ou d'une couture.

7. Dispositif de filtration suivant l'une des revendications précédentes, **caractérisé en ce que** la voie (48) de décharge s'étend sur toute la longueur de construction du milieu (18) filtrant et s'étend suivant une ligne de liaison, où les côtés (64) avant libres tournés l'un vers l'autre du milieu (18) filtrant se terminent et suivant laquelle ses côtés (64) frontaux sont assemblés fixement entre eux avec formation de la forme tubulaire.

8. Dispositif de filtration suivant l'une des revendications précédentes, **caractérisé en ce que** la forme tubulaire du milieu (18) filtrant est formée d'un tracé plissé des couches (54 à 62) du filtre se trouvant les unes contre les autres.

9. Dispositif de filtration suivant la revendication 8, **caractérisé en ce que** le dépassement (66) de la voie (48) de décharge, au-delà du contour du milieu (18) filtrant, correspond à peu près à la longueur d'une hauteur moyenne de pli de filtre du milieu (18) filtrant plissé et **en ce que** ce dépassement (66) est plié à angle droit (figure 7) et, en s'étendant suivant une partie des creux des plis filtrants, forme la surface de contact pour le contact avec le tube (20) d'appui conducteur de l'électricité de l'élément (10) filtrant.

10. Dispositif de filtration suivant l'une des revendications précédentes, **caractérisé en ce qu'**au moins l'une des deux parties '22, 24) de fermeture en forme de coiffe est conductrice de l'électricité et a au moins un point de contact conducteur avec la voie (48) de décharge.

11. Dispositif de filtration suivant l'une des revendications précédentes, **caractérisé en ce que** la voie (48) de décharge est constituée, au moins en partie, en étant perméable au fluide, notamment à la manière d'un tissé, d'un tricot ou d'un produit à maille.
